# FASCICULE DE BREVET EUROPEEN

(11) **EP 2 733 364 B1**
(45) Date de publication et mention de la délivrance du brevet: **08.04.2020**
(21) Numéro de dépôt: 13192696.6
(22) Date de dépôt: 13.11.2013
(51) Int. Cl.: F15B 15/14, A01B 63/32

(54) **Vérin à double effet avec un orifice additionnel et machine agricole présentant un tel vérin**
Doppelt wirkende Zylinder mit einer zusätzlichen Öffnung und Landwirtschaftliche Maschine mit einem solchen Zylinder
Double acting cylinder with an additional port and agricultural machine having such a cylinder

(30) Priorité: 16.11.2012 FR 1260910
(43) Date de publication de la demande: 21.05.2014
(73) Titulaire: KUHN S.A., 67700 Saverne (FR)
(72) Inventeur: Teitgen, Hervé, 57370 PHALSBOURG (FR); Reinhardt, Michel, 67340 BISCHHOLTZ (FR)
(74) Mandataire: Esch, Esther Evelyne

(56) Documents cités:
- EP-A1- 1 031 697
- EP-A1- 1 053 670
- EP-A1- 2 484 194
- FR-A1- 2 303 976
- FR-A1- 2 894 885

## Description

La présente invention concerne une machine de travail du sol avec un vérin à double effet comportant un corps à l'intérieur duquel est disposée une tige solidaire d'un piston définissant deux chambres de pression à l'intérieur du corps et pouvant être alimentées indépendamment l'une de l'autre par un fluide sous pression via un orifice d'alimentation respectif, et permettant de communiquer un déplacement longitudinal relatif entre ledit corps et ladite tige.

D'une manière générale, les vérins à double effet utilisés se composent d'un corps et d'une tige mobile. Ils sont montés entre un bâti fixe et un élément à déplacer. Ils comportent deux orifices d'alimentation et les déplacements de la tige étant communiqués par l'action d'un fluide sous pression qui agit alternativement sur l'une et l'autre face d'un piston solidaire de la tige. De tels vérins peuvent fournir donc un effort dans les deux sens, c'est-à-dire pour étendre et rétracter la tige. Il existe également des vérins du type à simple effet pour lesquels l'arrivée de la pression se fait sur un seul orifice d'alimentation pour entraîner le piston dans un seul sens, son retour s'effectuant sous l'action d'un ressort ou d'une force extérieure. Il est également connu d'utiliser un vérin à double effet dans une version simple effet, l'un des orifices d'alimentation n'est alors pas branché sur le circuit.

L'usage de tels vérins est fréquent sur les machines agricoles. Le choix du type de vérin se fait en fonction du travail à effectuer dans une application spécifique. Le vérin se comporte donc soit comme un vérin à simple ou à double effet, et cela sur toute la course de fonctionnement sachant que ces vérins à simple effet permettent soit de pousser, soit de tirer une charge. Contrairement à la version à simple effet, le vérin à double effet développe une force disponible à l'aller comme au retour pour produire un travail.

Le document EP 1 053 670 décrit une machine de fauchage comportant un vérin hydraulique du type simple effet qui est amené à fonctionner en mode double effet dans une configuration spécifique du bras et de l'outil. Le document FR 2 894 885 concerne un système de toit escamotable pour une voiture. Ce système dispose d'un orifice additionnel permettant d'obtenir une position intermédiaire du toit donnant accès au coffre de la voiture.

La présente invention a pour objet la réalisation d'une machine de travail du sol munie d'un vérin à double effet avec une plage de fonctionnement en double effet et une autre plage de fonctionnement en simple effet.

A cet effet, une importante caractéristique de l'invention consiste en ce que le vérin présente un orifice additionnel, relié à un dispositif de contrôle de passage, susceptible de neutraliser la pression dans l'une des chambres à partir d'une position donnée du piston dans le corps. Grâce à cette caractéristique, le mouvement du vérin est contrôlé dans les deux sens sur une partie de la course, alors que sur le restant de la course, le mouvement n'est contrôlé que dans un seul sens et surtout sur une certaine plage de sa course. Dans certaines applications, par exemple un semoir lié à une machine agricole via un cadre porteur hydraulique, le mouvement de descente par pivotement du semoir est contrôlé sur la première partie de la course ; puis à partir d'une certaine position, la descente n'est plus contrôlée et c'est par l'action d'une force extérieure, notamment le poids, que le mouvement de descente se termine pour arriver au sol. Ce mouvement non contrôlé évite que l'outil porté soit écrasé sur le sol, dans le cas où l'utilisateur n'arrête pas l'alimentation de la petite chambre du vérin. Dans d'autres applications, une telle liberté de mouvement dans un sens permet à des outils destinés à travailler le sol de s'adapter au relief du sol pour suivre le terrain.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** est une vue schématique d'un vérin conforme à l'invention,
- la **figure 2** est une vue schématique d'un vérin dans une autre position,
- la **figure 3** représente selon une vue latérale un exemple d'utilisation du vérin selon l'invention sur une machine agricole,
- la **figure 4** représente l'exemple d'utilisation de la figure 3 dans une autre position.

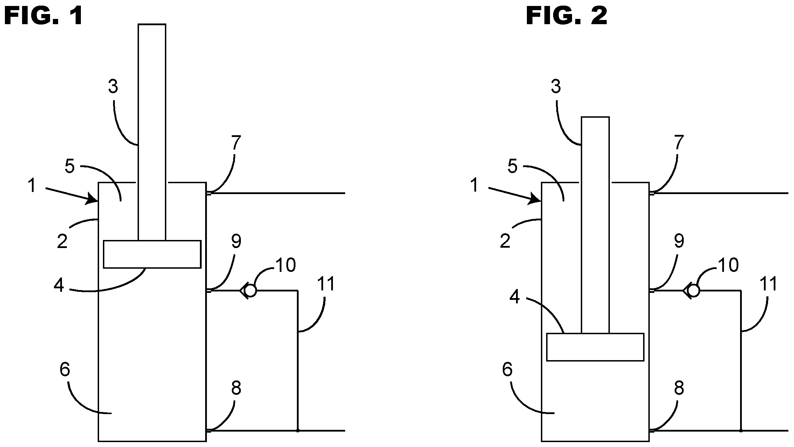

Les figures 1 et 2 représentent, sous forme schématique, un vérin (1) à double effet conforme à l'invention. Le vérin (1) comporte un corps (2) à l'intérieur duquel est disposée une tige (3) solidaire d'un piston (4). Le piston (4) définit deux chambres (5, 6) de pression à l'intérieur du corps (2). Le piston (4) est mobile en translation selon un axe principal correspondant à l'axe longitudinal du corps (2). Les chambres (5, 6) peuvent être alimentées indépendamment l'une de l'autre par un fluide sous pression via un orifice d'alimentation (7, 8) respectif. Les chambres (5, 6) communiquent avec une centrale hydraulique (non représentée) via un distributeur (non représenté). Le fluide est, par exemple, de l'huile hydraulique ou du gaz.

Selon une importante caractéristique de l'invention, le vérin (1) à double effet présente un orifice additionnel (9) relié à un dispositif de contrôle de passage (10) susceptible de neutraliser la pression dans l'une des chambres (5, 6) à partir d'une position donnée du piston (4) dans le corps (2). Grâce à cette caractéristique, le mouvement du vérin (1) est contrôlé dans les deux sens sur une partie de la course, alors que sur le restant de la course, le mouvement n'est contrôlé que dans un seul sens. Le vérin (1) à double effet selon l'invention dispose donc d'une liberté de mouvement dans un sens et surtout sur une certaine plage de sa course.

Le dispositif de contrôle de passage (10) permet notamment de contrôler le sens de circulation du fluide en ce qu'il permet le passage du fluide dans un sens et en ce qu'il bloque le flux de fluide s'il venait dans le sens inverse. De manière avantageuse, l'orifice additionnel (9) est ménagé dans le corps (2) du vérin (1) et s'étend sensiblement entre les orifices d'alimentation (7, 8) des deux chambres (5, 6). Une conduite additionnelle (11) relie le dispositif de contrôle de passage (10) au réservoir de la centrale hydraulique. Les orifices d'alimentation (7, 8) sont reliés au réservoir de la centrale hydraulique via une conduite d'alimentation respective. La conduite additionnelle (11) est branchée sur la conduite d'alimentation reliée à l'orifice d'alimentation (8) appartenant à la grande chambre (6). Le dispositif de contrôle de passage (10) est réalisé, avantageusement, sous la forme d'un clapet anti-retour. Ce clapet anti-retour a pour fonction d'autoriser le passage du fluide dans un sens et de le refuser dans l'autre.

Dans une alternative, le dispositif de contrôle de passage (10) est un clapet anti-retour piloté qui permet d'ouvrir le clapet ou d'autoriser le passage du fluide à partir d'une pression donnée. Dans une autre alternative, le dispositif de contrôle de passage (10) est un distributeur à deux positions dont l'une autorise et l'autre interdit le passage du fluide.

Les figures 1 et 2 représentent de manière schématique le vérin (1) à double effet dans une première situation et une deuxième situation. S'agissant d'un vérin à double effet, les chambres (5, 6) peuvent être alimentées et mises sous pression alternativement. Lorsque la grande chambre (6) est alimentée via le deuxième orifice (8), le fluide sous pression pousse le piston (4) pour faire sortir la tige (3). Par conséquent, la tige (3) peut transmettre un effort pour étendre le vérin (1). On constate que le dispositif de contrôle de passage (10) n'autorise pas le passage du fluide par l'orifice additionnel (9), quelle que soit la position du piston (4) dans le corps (2) parce que la même pression règne de chaque côté du dispositif de contrôle de passage (10).

Dans la situation représentée à la figure 1, le piston (4) se positionne entre le premier orifice (7) et l'orifice additionnel (9). Lorsque le piston (4) est amené à se déplacer dans cette zone à cause de l'alimentation en fluide de la petite chambre (5), le fluide sous pression pousse le piston (4) pour faire rentrer la tige (3) dans le corps (2). La tige (3) peut donc transmettre un effort pour rétracter le vérin (1). Etant donné que la tige (1) peut transmettre un effort dans les deux sens, pour étendre et pour rétracter le vérin (1), il se comporte comme un vérin du type à double effet. Le vérin (1) se comporte en vérin à double effet, lorsque le piston (4) est disposé entre le premier orifice (7) et l'orifice additionnel (9). Le dispositif de contrôle de passage (10) n'influe pas sur le fonctionnement du vérin (1) dans cette zone de fonctionnement.

Dans la situation représentée à la figure 2, le piston (4) se positionne entre le l'orifice additionnel (9) et le deuxième orifice (8). On constate que lorsque la petite chambre (5) est alimentée via le premier orifice (7), le fluide sous pression s'échappe via l'orifice additionnel (9) et le dispositif de contrôle de passage (10). Le piston (4) n'est plus poussé afin de faire rentrer la tige (3) sous l'action du fluide. En effet, l'huile de la petite chambre (5) fuit vers le réservoir grâce au dispositif de contrôle de passage (10) qui autorise le passage du fluide. La tige (3) ne peut se déplacer, pour rétracter le vérin (1), que sous l'action d'une charge extérieure. Dans cette zone de fonctionnement, représentée à la figure 2, la tige (3) du vérin ne transmet un effort que dans un seul sens, pour étendre le vérin (1). La présence de l'orifice additionnel (9) et du dispositif de contrôle de passage (10) neutralise le fonctionnement à double effet du vérin (1) pour un fonctionnement à simple effet.

Selon la description qui précède, la zone de fonctionnement en simple effet se fait lors de la rétractation du vérin (1). Le dispositif de contrôle de passage (10) étant relié à la petite chambre (5) du vérin (1). D'une manière similaire et non représentée et non décrite, lorsque le dispositif de contrôle de passage (10) est relié à la grande chambre (6), la zone de fonctionnement en simple effet se fait lors de l'extension du vérin (1).

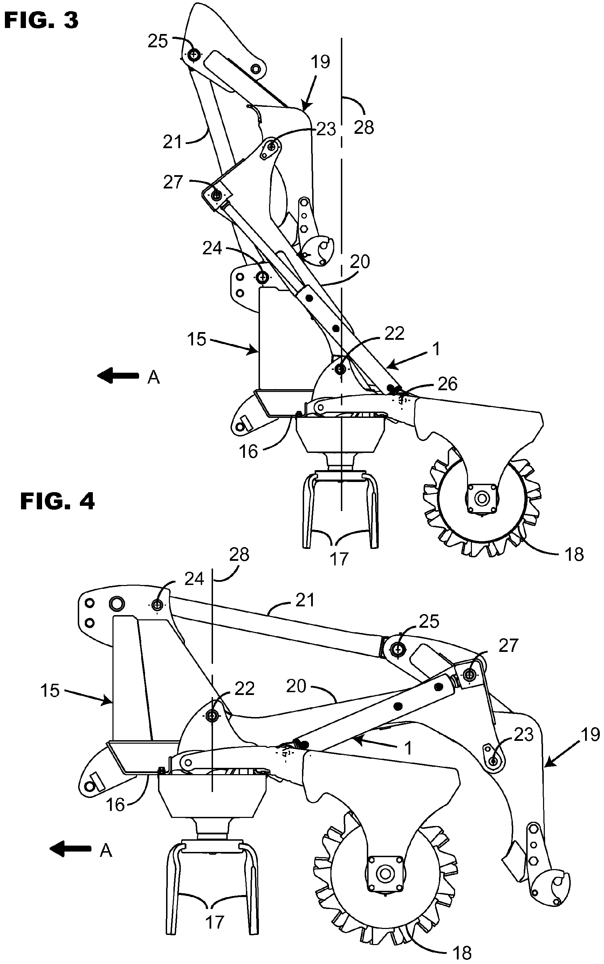

Les figures 3 et 4 montrent une utilisation d'un vérin (1) à double effet selon l'invention sur une machine agricole. De telles machines agricoles sont destinées à effectuer des opérations de travail du sol, de plantation, de récolte, etc. La machine agricole représentée est une machine de travail du sol (15) destinée à la préparation de lits de semences. Cette machine de travail du sol (15) comporte un châssis (16) portant des outils (17) pouvant être animés ou statiques. Dans la réalisation représentée, la machine de travail du sol (15) est une herse rotative dont les outils (17) sont animés via la prise de force du tracteur. La herse rotative permet une reprise superficielle du labour et la préparation du lit de semences. Un rouleau (18), pour rappuyer et compléter l'émiettement du sol, est disposé à l'arrière des outils (17). Il permet aussi de contrôler la profondeur de travail.

Sur le châssis (16), de la herse rotative, est monté un cadre porteur (19) via deux bras articulés (20, 21). Ce cadre porteur (19) est destiné à supporter un outil porté qui n'est pas représenté sur les figures. Un tel cadre porteur (19) permet de placer l'outil porté dans une position de travail et/ou dans une position de transport via notamment un vérin (1) à double effet. La figure 3 montre le cadre porteur (19) dans une position haute, dite de transport, alors que la figure 4 montre le cadre porteur (19) dans une position basse, dite de travail. Le cadre porteur (19) peut être relevé respectivement abaissé au moyen du vérin (1) à double effet. L'outil porté est, par exemple, un semoir ou une planteuse. Avec une telle combinaison formée par une herse rotative et un semoir, à titre d'exemple, différentes opérations peuvent être réalisées lors d'un unique passage sur un champ. Un tracteur (non représenté) étant amené à déplacer et à animer cette combinaison suivant une direction d'avance indiquée par la flèche (A).

A la lumière des figures 3 et 4, le cadre porteur (19) comporte un bras inférieur (20) et un bras supérieur (21). Le bras inférieur (20) est lié au châssis (16) au moyen d'une première articulation (22) et est lié au cadre porteur (19) au moyen d'une deuxième articulation (23). Le bras supérieur (21) est lié au châssis (16) au moyen d'une troisième articulation (24) et est lié au cadre porteur (19) au moyen d'une quatrième articulation (25). Les articulations (22 à 25) présentent chacune un axe d'articulation sensiblement horizontal et perpendiculaire à la direction d'avance (A). Le vérin (1) à double effet est monté sur le châssis (16) au moyen d'une cinquième articulation (26) et est monté sur le cadre porteur (19) au moyen d'une sixième articulation (27). La cinquième articulation (26) et la sixième articulation (27) présentent un axe sensiblement horizontal. Le vérin (1) s'étend à proximité du bras inférieur (20).

Grâce au vérin (1) à double effet, le cadre porteur (19) peut passer d'une position de travail (figure 4) à une position de transport (figure 3), et inversement. Avec l'exemple d'une herse rotative et d'un semoir, le semoir est placé sensiblement au-dessus de la herse rotative lorsque le cadre porteur (19) s'étend dans sa position haute illustrée à la figure 3, alors que le semoir est placé derrière la herse rotative lorsque le cadre porteur (19) s'étend dans sa position basse illustrée à la figure 4.

Lorsque le cadre porteur (19) passe de la position de travail à la position de transport, la longueur du vérin (1) s'accroît du fait de l'alimentation de la grande chambre (6) pour relever le cadre porteur (19). Le vérin (1) travaille en poussant. Pour cela, le cadre porteur (19) pivote notamment autour de la première articulation (22) du bras inférieur (20). Dans cette position haute, on remarque que la deuxième articulation (23) du bras inférieur (20) se trouve en avant d'un plan vertical (28) passant par la première articulation (22) compte tenu de la direction d'avance (A).

A l'inverse pour passer de la position haute (figure 3) du cadre porteur (19) vers la position basse (figure 4), la longueur du vérin (1) se réduit. Le vérin (1) passera alors successivement par une zone de fonctionnement à double effet puis par une zone de fonctionnement à simple effet : c'est-à-dire que le vérin (1) fonctionnera d'abord comme un vérin à double effet, pour faire pivoter le cadre porteur (19) et notamment la deuxième articulation (23) derrière le plan vertical (28) puis le fonctionnement basculera vers du simple effet lorsque le piston (4) passe au-delà de l'orifice additionnel (9). Le cadre porteur (19), qui porte le semoir, pivotera vers le sol sous l'action d'une charge extérieure et notamment sous l'action du poids du semoir. Lors du passage de la position haute à la position basse, il n'y a donc pas de risque d'écraser le semoir au sol, même si l'utilisateur n'arrête pas l'alimentation de la petite chambre (5). L'orifice additionnel (9) et le dispositif de contrôle de passage (10) permettent au vérin (1) de se comporter comme un vérin à simple effet, même si la pression au niveau de la petite chambre (5) n'a pas cessée.

D'une manière particulièrement avantageuse, le cadre porteur (19) est relié au châssis (16) de la machine agricole (15) au moyen d'un bras supérieur (21) et de deux bras inférieurs (20). Un bras inférieur (20) étant disposé en dessous et de part et d'autre du bras supérieur (21). Un vérin (1) selon l'invention est associé à chaque bras inférieur (20). La commande des vérins (1) doit s'effectuer simultanément pour que le cadre porteur (19) se relève ou s'abaisse sensiblement parallèlement au sol.

Selon un exemple de réalisation non représenté, le cadre porteur (19), monté sur la machine de travail du sol (15), porte une barre de semis. La barre de semis est constituée d'une traverse sur laquelle sont montées des éléments semeurs via des bras. La traverse est constituée d'une ou plusieurs parties. Une tête de distribution permet de répartir la semence vers les différents éléments semeurs via des tuyaux respectifs. La tête de distribution est approvisionnée en semence par un dispositif de dosage s'étendant dans la partie inférieure d'une trémie. Avec une combinaison d'une machine de travail du sol et une barre de semis, la trémie est montée à l'avant du tracteur, ce qui permet une meilleure répartition des charges. D'une manière avantageuse, le dispositif de contrôle de passage (10) est associé à un robinet (non représenté). Le robinet s'étend entre l'orifice additionnel (9) et le dispositif de contrôle de passage (10). Ce robinet permet, lorsqu'il est fermé, d'annuler le fonctionnement du vérin (1) en mode simple effet. Il neutralise l'orifice additionnel (9). Une telle fonctionnalité est intéressante en combinaison avec une barre de semis pour pouvoir exercer de la pression supplémentaire sur les éléments semeurs. La commande du robinet se fait de manière mécanique ou électronique.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine agricole de travail du sol pourvue d'un vérin (1) à double effet, ledit vérin (1) à double-effet comportant un corps (2) à l'intérieur duquel est disposée une tige (3) solidaire d'un piston (4) définissant deux chambres (5, 6) de pression à l'intérieur du corps (2) et pouvant être alimentées indépendamment l'une de l'autre par un fluide sous pression via un orifice d'alimentation (7, 8) respectif, et permettant de communiquer un déplacement longitudinal relatif entre ledit corps (2) et ladite tige (3), le vérin (1) présentant un orifice additionnel (9) relié à un dispositif de contrôle de passage (10) susceptible de neutraliser la pression dans l'une des chambres (5, 6) à partir d'une position donnée du piston (4) dans le corps (2), ledit orifice additionnel (9) étant ménagé dans ledit corps (2) et s'étendant sensiblement entre les orifices d'alimentation (7, 8) des deux chambres (5, 6).

2. Machine agricole de travail du sol selon la revendication 1, ***caractérisé en ce qu***'une conduite additionnelle (11) relie le dispositif de contrôle de passage (10) à la conduite d'alimentation reliée à l'orifice d'alimentation (8) de l'une des chambres (5, 6) du vérin (1).

3. Machine agricole de travail du sol selon l'une quelconque des revendications 1 à 2, ***caractérisé en ce que*** ledit dispositif de contrôle de passage (10) est réalisé sous la forme d'un clapet anti-retour.

4. Machine agricole de travail du sol selon l'une quelconque des revendications 1 à 2, ***caractérisé en ce que*** ledit dispositif de contrôle (10) est réalisé sous la forme d'un clapet anti-retour piloté.

5. Machine agricole de travail du sol selon l'une quelconque des revendications 1 à 2, ***caractérisé en ce que*** ledit dispositif de contrôle (10) est réalisé sous la forme d'un distributeur.

6. Machine agricole de travail du sol selon l'une quelconque des revendications 1 à 5, ***caractérisé en ce* que** le vérin comporte une petite chambre (5), laquelle est reliée à l'orifice d'alimentation (8) par l'intermédiaire du dispositif de contrôle de passage (10).

7. Machine agricole de travail du sol selon l'une quelconque des revendications 1 à 5, ***caractérisé en ce* que** le vérin comporte une grande chambre (6), laquelle est reliée à l'orifice d'alimentation (8) par l'intermédiaire du dispositif de contrôle de passage (10).

8. Machine agricole de travail du sol selon l'une quelconque des revendications 1 à 7, ***caractérisé en ce qu'***un robinet est disposé entre l'orifice additionnel (9) et le dispositif de contrôle de passage (10).

9. Machine agricole de travail du sol selon l'une quelconque des revendications précédentes, comprenant un châssis (16) sur lequel est monté un cadre porteur (19) comportant un bras inférieur (20) et un bras supérieur (21), ledit bras inférieur (20) étant articulé sur ledit châssis (16) via une première articulation (22) et sur le cadre porteur (19) via une deuxième articulation (23), ***caractérisée en ce que*** ledit cadre porteur (19) est relevé, respectivement abaissé au moyen du vérin (1) à double effet.

10. Machine agricole de travail du sol selon la revendication 9, ***caractérisée en ce* que** le cadre porteur (19) supporte un outil porté.

11. Machine agricole de travail du sol selon la revendication 9, ***caractérisée en ce* que** le cadre porteur (19) supporte une barre de semis.

## Patentansprüche

1. Landwirtschaftliche Bodenbearbeitungsmaschine, die mit einem doppeltwirkenden Zylinder (1) ausgestattet ist, wobei der doppeltwirkende Zylinder (1) einen Körper (2) umfasst, in dem eine Stange (3) angeordnet ist, die mit einem Kolben (4) fest verbunden ist, der zwei Druckkammern (5, 6) innerhalb des Körpers (2) definiert, die unabhängig voneinander mit einem druckbeaufschlagten Fluid über eine jeweilige Versorgungsöffnung (7, 8) versorgt werden können, und der es gestattet, eine relative Längsverschiebung zwischen vom Körper (2) auf die Stange (3) zu übertragen, wobei der Zylinder (1) eine zusätzliche Öffnung (9) aufweist, die mit einer Durchflusskontrollvorrichtung (10) verbunden ist, die geeignet ist, den Druck in einer der Kammern (5, 6) ausgehend von einer gegebenen Position des Kolbens (4) im Körper (2) zu neutralisieren, wobei die zusätzliche Öffnung (9) im Körper (2) vorgenommen ist und sich im Wesentlichen zwischen den Versorgungsöffnungen (7, 8) der zwei Kammern (5, 6) erstreckt.

2. Landwirtschaftliche Bodenbearbeitungsmaschine nach Anspruch 1, ***dadurch gekennzeichnet, dass*** eine zusätzliche Leitung (11) die Durchflusskontrollvorrichtung (10) mit der Zuleitung verbindet, die mit der Versorgungsöffnung (8) von einer der Kammern (5, 6) des Zylinders (1) verbunden ist.

3. Landwirtschaftliche Bodenbearbeitungsmaschine nach irgendeinem der Ansprüche 1 bis 2, ***dadurch gekennzeichnet, dass*** die Durchflusskontrollvorrichtung (10) in Form eines Rückschlagventils ausgeführt ist.

4. Landwirtschaftliche Bodenbearbeitungsmaschine nach irgendeinem der Ansprüche 1 bis 2, ***dadurch gekennzeichnet, dass*** die Durchflusskontrollvorrichtung (10) in Form eines gesteuerten Rückschlagventils ausgeführt ist.

5. Landwirtschaftliche Bodenbearbeitungsmaschine nach irgendeinem der Ansprüche 1 bis 2, ***dadurch gekennzeichnet, dass*** die Durchflusskontrollvorrichtung (10) in Form eines Verteilers ausgeführt ist.

6. Landwirtschaftliche Bodenbearbeitungsmaschine nach irgendeinem der Ansprüche 1 bis 5, ***dadurch gekennzeichnet, dass*** der Zylinder eine kleine Kammer (5) umfasst, die mit der Versorgungsöffnung (8) über die Durchflusskontrollvorrichtung (10) verbunden ist.

7. Landwirtschaftliche Bodenbearbeitungsmaschine nach irgendeinem der Ansprüche 1 bis 5, ***dadurch gekennzeichnet, dass*** der Zylinder eine große Kammer (6) umfasst, die mit der Versorgungsöffnung (8) über die Durchflusskontrollvorrichtung (10) verbunden ist.

8. Landwirtschaftliche Bodenbearbeitungsmaschine nach irgendeinem der Ansprüche 1 bis 7, ***dadurch gekennzeichnet, dass*** ein Ventil zwischen der zusätzlichen Öffnung (9) und der Durchflusskontrollvorrichtung (10) angeordnet ist.

9. Landwirtschaftliche Bodenbearbeitungsmaschine nach irgendeinem der vorhergehenden Ansprüche mit einem Gestell (16), auf dem ein Tragwerk (19) angebracht ist, das einen unteren Arm (20) und einen oberen Arm (21) umfasst, wobei der untere Arm (20) auf dem Gestell (16) über ein erstes Gelenk (22) und auf dem Tragwerk (19) über ein zweites Gelenk (23) angelenkt ist, ***dadurch gekennzeichnet, dass*** das Tragwerk (19) mittels eines doppeltwirkenden Zylinders (1) angehoben beziehungsweise abgesenkt wird.

10. Landwirtschaftliche Bodenbearbeitungsmaschine nach Anspruch 9, ***dadurch gekennzeichnet, dass*** das Tragwerk (19) ein angebautes Werkzeug trägt.

11. Landwirtschaftliche Bodenbearbeitungsmaschine nach Anspruch 9, ***dadurch gekennzeichnet, dass*** das Tragwerk (19) einen Säbalken trägt.

## Claims

1. Agricultural soil working machine fitted with a double-acting cylinder (1), the double-acting cylinder (1) comprising a body (2) inside which there is a rod (3) rigidly fastened to a piston (4) defining two pressure chambers (5, 6) inside the body (2), which chambers can each be supplied independently from the other with a pressurized fluid, through a respective supply opening (7, 8), making it possible to transmit a relative longitudinal motion between the body (2) and the rod (3), the cylinder (1) having an additional opening (9) connected to a flow control device (10), able to neutralize the pressure in one of the chambers (5, 6), starting from a given position of the piston (4) in the body (2), the additional opening (9) being made in the body (2) and extending substantially between the supply openings (7, 8) of the two chambers (5, 6).

2. Agricultural soil working machine according to claim 1, ***characterised in that*** an additional line (11) connects the flow control device (10) to the supply line connected to the supply opening (8) of one of the chambers (5, 6) of the cylinder (1).

3. Agricultural soil working machine according to any one of claims 1 to 2, ***characterised in that*** the flow control device (10) is made in the form of a non-return valve.

4. Agricultural soil working machine according to any one of claims 1 to 2, ***characterised in that*** the control device (10) is made in the form of a controlled non-return valve.

5. Agricultural soil working machine according to any one of claims 1 to 2, ***characterised in that*** the control device (10) is made in the form of a directional control valve.

6. Agricultural soil working machine according to any one of claims 1 to 5, ***characterised in that*** the cylinder comprises a small chamber (5), which chamber is connected to the supply opening (8) by the flow control device (10).

7. Agricultural soil working machine according to any one of claims 1 to 5, ***characterised in that*** the cylinder comprises a large chamber (6), which chamber is connected to the supply opening (8) by the flow control device (10).

8. Agricultural soil working machine according to any one of claims 1 to 7, ***characterised in that*** a valve is placed between the additional opening (9) and the flow control device (10).

9. Agricultural soil working machine according to any one of the preceding claims, comprising a chassis (16), on which is mounted a carrier frame (19) comprising a lower arm (20) and an upper arm (21), the lower arm (20) being articulated on the chassis (16) via a first articulation (22) and on the carrier frame (19) via a second articulation (23), ***characterized in that*** the carrier frame (19) is respectively raised or lowered by means of a double-acting cylinder (1).

10. Agricultural soil working machine according to claim 9, ***characterized in that*** the carrier frame (19) supports a mounted tool.

11. Agricultural soil working machine according to claim 9, ***characterized in that*** the carrier frame (19) supports a seedbar.
